# EUROPÄISCHE PATENTSCHRIFT

(11) **EP 1 650 003 B1**
(45) Veröffentlichungstag und Bekanntmachung des Hinweises auf die Patenterteilung: **01.04.2009**
(21) Anmeldenummer: 05021564.9
(22) Anmeldetag: 01.10.2005
(51) Int. Cl.: B29C 45/28, B29C 45/56, A61J 1/05

(54) **Vorrichtung zum Herstellen eines rohrförmigen Körpers**
Device for manufacturing a tubular body
Dispositif pour la fabrication d'un objet tubulaire

(30) Priorität: 23.10.2004 DE 102004051744
(43) Veröffentlichungstag der Anmeldung: 26.04.2006
(73) Patentinhaber: Otto Männer Innovation GmbH, 79353 Bahlingen (DE)
(72) Erfinder: Spuller, Swen, 79362 Forchheim (DE)
(74) Vertreter: Dimmerling, Heinz

(56) Entgegenhaltungen:
- FR-A- 2 426 619
- US-A- 6 145 688
- PATENT ABSTRACTS OF JAPAN Bd. 1997, Nr. 03, 31. März 1997 (1997-03-31) -& JP 08 300418 A (IKEGAMI KANAGATA KOGYO KK), 19. November 1996 (1996-11-19)
- PATENT ABSTRACTS OF JAPAN Bd. 1997, Nr. 06, 30. Juni 1997 (1997-06-30) -& JP 09 039059 A (MITSUBISHI MATERIALS CORP), 10. Februar 1997 (1997-02-10)
- PATENT ABSTRACTS OF JAPAN Bd. 2003, Nr. 12, 5. Dezember 2003 (2003-12-05) -& JP 2004 237518 A (SUMITOMO HEAVY IND LTD), 26. August 2004 (2004-08-26)
- LANG A: "HEISSKANALTECHNIK HEUTE SYSTEME, ENTWICKLUNGEN, TRENDS" KUNSTSTOFFE, CARL HANSER VERLAG, MUNCHEN, DE, Bd. 90, Nr. 11, November 2000 (2000-11), Seiten 80,82,84,86,88-89, XP000969590 ISSN: 0023-5563
- PATENT ABSTRACTS OF JAPAN Bd. 1998, Nr. 06, 30. April 1998 (1998-04-30) & JP 10 034717 A (TOYO MACH & METAL CO LTD), 10. Februar 1998 (1998-02-10)
- PATENT ABSTRACTS OF JAPAN Bd. 014, Nr. 091 (M-0938), 20. Februar 1990 (1990-02-20) & JP 01 301219 A (TERUMO CORP), 5. Dezember 1989 (1989-12-05)
- PATENT ABSTRACTS OF JAPAN Bd. 012, Nr. 432 (M-763), 15. November 1988 (1988-11-15) -& JP 63 165128 A (TERUMO CORP), 8. Juli 1988 (1988-07-08)

## Beschreibung

Die Erfindung betrifft eine Vorrichtung nach dem Oberbegriff des Anspruchs 1, zum Herstellen eines rohrförmigen Körpers, welcher in seinem Inneren eine sich quer zur Längsachse des rohrförmigen Körpers erstreckende membranförmige Trennwand aufweist, mit einer Spritzgießform, welche einen der Wandung des rohrförmigen Körpers entsprechenden spaltförmigen Hohlraum aufinreist, welcher durch eine Öffnung in der Spritzgießform und einen in der Öffnung angeordneten Dorn gebildet wird.

Ein derartiger Körper ist beispielsweise aus der DE 8 806 805 U bekannt und wird beispielsweise im medizinischen Bereich bei der Anwendung von Infusionen verwendet. Hierbei sitzt der Körper auf einem zapfenförmigen Teil der Ausflußöffnung eines Infusionsbehälters. Durch die membranförmige Trennwand ist die Ausflußöffnung des Infusionsbehälters verschlossen. Bei der Verwendung der Infusion wird die der Ausflußöffnung abgewandte Öffnung des rohrförmigen Körpers mit einer Leitung verbunden, welche an ihrem vorderen Ende so ausgebildet ist, daß sie die membranförmige Trennwand durchstoßen kann, wodurch der Verschluß des Infusionsbehälters zerstört ist und der Inhalt des Infusionsbehäfters durch den rohrförmigen Körper in die Infusionsleitung fließt.

Da mittels des Körpers der Infusionsbehälter dicht verschlossen sein muß, muß die membranförmige Trennwand dicht mit der Wandung des rohrförmigen Körpers verbunden sein. Des weiteren muß die membranförmige Trennwand sehr dünn ausgebildet sein, damit sie ohne große Kraftanstrengung durchstoßen werden kann. Würde der Körper auf bekannte Weise mittels eines Spritzgießwerkzeugs hergestellt, wäre die membranförmige Trennwand nicht so dünn, daß sie auf einfache Weise durchstoßen werden könnte. Denn damit Schmelze sich in einen Spalt des Werkzeugs erstreckt, durch den die membranförmige Trennwand gebildet wird, müßte dieser Spalt eines Mindestdicke von etwa ein bis zwei Millimeter haben. Eine Trennwand, deren Dicke ein bis zwei Millimeter beträgt, läßt sich jedoch nicht mehr auf einfache Weise durchstoßen.

Zur Herstellung der Körper wird daher die membranförmige Trennwand auf bekannte Weise mittels Spritzprägens hergestellt, wobei die Dicke der Trennwand etwa 0,2 bis 0,3 Millimeter beträgt. Die Membran wird dann in das Innere eines auf herkömmliche Weise beispielsweise mittels eines Ringangußverfahrens hergestelltes Röhrchen eingebracht und mit diesem mittels einer Ultraschallschweißung verbunden. Dies ist jedoch einerseits sehr aufwendig, und andererseits besteht die Gefahr, daß beim Ultraschallschweißen Fehler auftreten und die Membran daher nicht dicht mit der Wandung des Röhrchens verbunden ist.

Aus PATENT ABSTRACTS OF JAPAN Bd. 1997, Nr. 03, 31. März 1997 (1997-03-31) -& JP 08 300418 A (IKEGAMI KANAGATA KOGYO KK), 19. November 1996 (1996-11-19) ist eine Vorrichtung zur Herstellung eines rohrförmigen Körpers bekannt, bei welcher der der Wandung des rohrförmigen Körpers entsprechende Hohlraum durch eine Öffnung in einer Formhälfte und einen in der Öffnung angeordneten Dron gebildet wird. Der Dorn ist fest in der Formhälfte angeordnet und lässt sich mit der Formhälfte axial verschieben.

Aus PATENT ABSTRACTS OF JAPAN Bd. 1997, Nr. 06, 30. Juni 1997 (1997-06-30)-& JP 09 039059 A (MITSUBISHI MATERIALS CORP), 10. Februar 1997 (1997-02-10) ist weiterhin eine Vorrichtung zur Herstellung eines rohrförmigen Körpers bekannt, welcher in seinem Inneren eine sich quer zu seiner Längsachse erstreckende Trennwand aufweist. Der dem rohrförmigen Körper entsprechende Hohlraum wird durch Hohlräume in Formhälften, in denen Teile eines Dorns angeordnet sind, gebildet. Zur Verdichtung der in dem Hohlraum befindlichen Kunststoffschmelze lässt sich bei geschlossener Form ein Teil einer Formhälfte mit dem darin angeordneten Teil des Dorns noch in Richtung der anderen Formhälfte verstellen, wodurch sich das Volumen des Hohlraums verringert.

Aus der US-A-6 145 688 (SMITH ET AL) 14. November 2000 (2000-11-14) sind rohrförmige Körper bekannt, welche mittels Spritzguß hergestellt sind.

Es ist Aufgabe der Erfindung, eine eingangs genannte Vorrichtung derart auszubilden, daß mittels ihr auf einfache Weise die membranförmige Trennwand dicht in dem rohrförmigen Körper anordenbar ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Eine Vorrichtung zum Herstellen eines rohrförmigen Körpers, welcher in seinem Inneren eine sich quer zur Längsachse des rohrförmigen Körpers erstreckende membranförmige Trennwand aufweist, mit einer Spritzgießform, welche einen der Wandung des rohrförmigen Körpers entsprechenden ring-spaltförmigen Hohlraum aufweist, welcher durch eine Öffnung in der Spritzgießform und einen in der Öffnung angeordneten Dom gebildet wird, weist einem Durch auf der aus einem oberen Teil und einem unteren Teil besteht und wobei einer der Teile axial verschiebbar ist.

Dadurch, daß der Dorn aus einem oberen Teil und einem unteren Teil besteht und einer der Teile axial verschiebbar ist, läßt sich der Spalt, der sich bei gegenüberstehenden Teilen des Doms zwischen den Stirnflächen der Teile ausbildet und durch welchen die membranförmige Trennwand gebildet wird, verändern. Hierdurch ist es in vorteilhafter Weise möglich, den Spalt zunächst groß einzustellen, so daß beim Spritzgießen der Spalt vollständig mit Schmelze gefüllt wird, und anschließend den Spalt soweit zu verringern, daß der Abstand der Stirnflächen der Dornteile der gewünschten Dicke der membranförmigen Trennwand entspricht. Durch die erfindungsgemäße Vorrichtung ist es somit möglich, den rohrförmigen Körper einstückig durch Spritzgießen herzustellen ohne daß dabei die membranförmige Trennwand unerwünscht dick wird.

Mittels der erfindungsgemäßen Vorrichtung lassen sich, die Vorteile, die sich bei einem Ringanguß ergeben, mit den Vorteilen verknüpfen, die durch das Spritzprägen erreicht werden können, wobei jedoch in besonders vorteilhafter Weise zusätzlich erreicht wird, daß der rohrförmige Körper und die Membran aus einem Guß sind. Dies wirkt sich erheblich vorteilhaft auf die Dichtheit der Membran aus.

Bei der Erfindung ist vorgesehen, daß eine Spritzgießdüse zur Zuführung von Schmelze in den ringspaltförmigen Hohlraum vorhanden ist, welche eine ringförmige Düsenaustrittsöffnung hat. Hierdurch läßt sich die Schmelze in sehr gleichmäßiger Form in den ringspaltförmigen Hohlraum einbringen. Dies wirkt sich sehr vorteilhaft auf die Qualität des Spritzgießkörpers aus.

Bei der Erfindung ist vorgesehen, daß ein rohrförmiges Verschlußelement vorhanden ist, zum Verschließen der Düsenaustrittsöffnung. Hierdurch läßt sich die Zuführung der Schmelze zeitlich steuem. Es ist somit möglich, die Düsenaustrittsöffnung solange offen zu lassen, bis die beiden Dornteile sich in dem vorgegebenen Abstand, der der Dicke der membranförmigen Trennwand entspricht, gegenüberstehen.

Es ist somit besonders vorteilhaft, wenn eine Steuerung vorhanden ist, mittels der die axiale Verschiebung des verschiebbaren Dornteils sowie das Verschlußelement steuerbar sind. Hierdurch ist es auf einfache Weise möglich, für das Schließen der Düsenaustrittsöffnung einen optimalen Zeitpunkt einzustellen. So kann die Düsenaustrittsöffnung bereits kurz vor Erreichen der Endposition des verschiebbaren Dornteils verschlossen werden, wodurch sich die Dichte des Spritzgießteils erhöht.

Sehr vorteilhaft ist auch eine Ausführungsform der Erfindung, bei der ein Mindestabstand zwischen den Domteilen einstellbar ist. Hierdurch läßt sich auf einfache Weise die Dicke der membranförmigen Trennwand sehr genau einstellen.
Bei einer weiteren besonderen Ausführungsform der Erfindung ist vorgesehen, daß ein Mischelement vorhanden ist, welches das Verschlußelement zumindest teilweise umschließt. Durch das Mischelement wird die Schmelze so um das Verschlußelement gelenkt, daß sie hinter dem Verschlußelement so wieder zusammenfließt, daß keine Fließlinie entsteht. Das Mischelement muß daher so ausgebildet sein, daß die Schmelze hinter dem Verschlußelement gut durchmischt ist.

Dies läßt sich in vorteilhafter Weise dadurch en-eichen, daß das Mischelement auf seiner Oberfläche ausgebildete kanalförmige Vertiefungen für die Schmelze aufweist. Durch die kanalförmigen Vertiefungen wird der Weg der Schmelze vorgegeben. Statt als relativ großvolumiger zusammenhängender Massenstrom wird die Schmelze durch die kanalförmigen Vertiefungen in eine Vielzahl von Einzelströmen aufgeteilt, welche hinter dem Verschlußelement wieder zusammenfließen. Hierdurch entsteht eine sehr gute Durchmischung der Schmelze hinter dem Verschlußelement, wodurch sich in vorteilhafter Weise eine Fließlinie nicht mehr ausbilden kann.

Sehr vorteilhaft bei der letztgenannten Ausführungsform ist es, wenn der Querschnitt der Vertiefungen variiert. Hierdurch wird in weiterer Weise auf den Massenstrom der Schmelze Einfluß genommen. So kann dadurch, daß der Querschnitt im Bereich der Zuführung der Schmelze kleiner ist als im Bereich des Zusammenflusses der Schmelze hinter dem Mischelement erreicht werden, daß trotz des längeren Weges, den die Schmelze bis zum Zusammenfließen hinter dem Verschlußelement zurücklegen muß, der sich in axialer Richtung bewegende Massenstrom der Schmelze hinter dem Mischelement genauso groß ist wie im Bereich der Zuführung der Schmelze vor dem Mischelement. Durch eine entsprechende Ausbildung der kanalförmigen Vertiefungen kann erreicht werden, daß der sich in axialer Richtung des Verschlußelementes erstreckende Massenstrom der Schmelze rings um das Mischelement gleich groß ist. Dies ist insbesondere bei einer ringförmigen Düsenaustrittsöffnung sehr vorteilhaft.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine erfindungsgemäße Vorrichtung im Schnitt,
- Figur 2: die in Figur 1 dargestellte Vorrichtung in Explosionsdarstellung,
- Figur 3: ein mittels der erfindungsgemäßen Vorrichtung herzustellender rohrförmiger Körper im Schnitt,
- Figur 4: eine vergrößerte Detaildarstellung eines Ausschnitts aus Figur 1 bei geöffneter Düse und
- Figur 5: eine vergrößerte Detaildarstellung eines Ausschnitts aus Figur 1 bei geschlossener Düse.

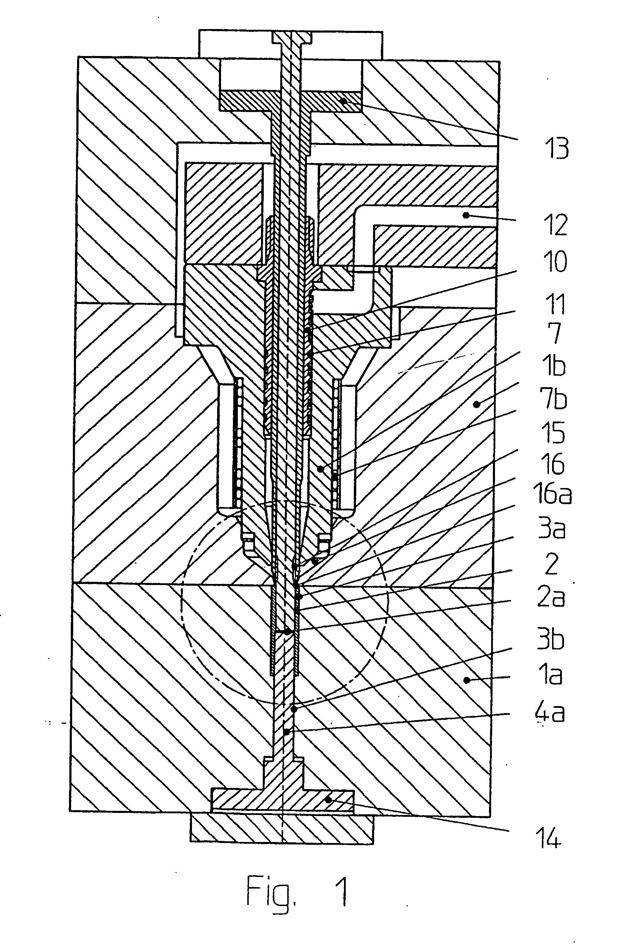

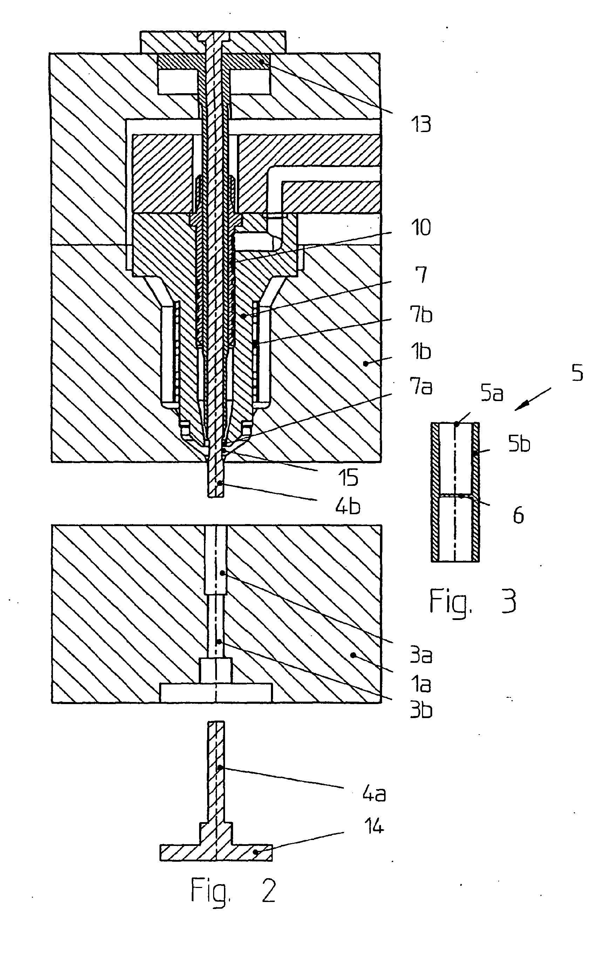

Wie insbesondere Figuren 1 und 2 entnommen werden kann, besteht eine erfindungsgemäße Vorrichtung im wesentlichen aus einer oberen Werkzeughälfte 1 b und einer unteren Werkzeughälfte 1 a. In der oberen Werkzeughälfte 1 b ist eine Spritzgießdüse 7 angeordnet, durch welche sich der obere Teile 4b eines Doms 4a, 4b erstreckt. Hierdurch hat die Spritzgießdüse 7 eine ringförmige Düsenaustrittsöffnung 7a. Die Düsenaustrittsöffnung 7a mündet in einen in der oberen Werkzeughälfte 1 b ausgebildeten ringförmigen Hohlraum 16, welcher den unteren Bereich der Spritzgießdüse 7 umschließt. Hierdurch wird auf einfache Weise die Ableitung von Wärme aus dem unteren Bereich der Spritzgießdüse 7 unterbunden. Des weiteren erstreckt sich der ringförmige Hohlraum 16 bis an die untere Werkzeughälfte 1a, wobei sich die Dicke des ringförmigen Hohlraums 16 bis auf einen Spalt 16a von etwa einem halben Millimeter verringert. Dieser sogenannte Anbindungsspalt 16a dient zur Zuführung von Schmelze 8. Der Körper der Spritzgießdüse 7 ist teilweise von einer Heizwicklung 7b umgeben.

Durch die untere Werkzeughälfte 1a erstreckt sich in axialer Richtung eine Stufenbohrung 3a, 3b. Der Durchmesser des oberen Teils 3a der Stufenbohrung 3a, 3b entspricht dem Außendurchmesser des mit der Vorrichtung herzustellenden rohrförmigen Körpers. Der Durchmesser des unteren Teils 3b der stufenförmigen Bohrung 3a, 3b entspricht dem Durchmesser des unteren Teils 4a des Doms 4a, 4b. Der Durchmesser des unteren Teils 4a des Dorns 4a, 4b entspricht gleichzeitig dem Innendurchmesser des herzustellenden rohrförmigen Körpers 5.

Der Durchmesser des oberen Teils 4b des Doms 4a, 4b entspricht dem Durchmesser des unteren Teils 4a des Dorns 4a, 4b.

Wird die obere Werkzeug hälfte 1 b auf die untere Werkzeughälfte 1a aufgesetzt, ragt der obere Teil 4b des Dorns 4a, 4b, der fest mit der oberen Werkzeughälfte 1 b verbunden ist, etwa bis zur Hälfte in den oberen Teil 3a der Stufenbohrung 3a, 3b hinein. Der untere Teil 4a des Doms 4a, 4b, welcher axial verschiebbar in der unteren Werkzeughälfte 1a angeordnet ist und mittels eines Kolbens 14 axial verschoben werden kann, ragt im zusammengebauten Zustand soweit in den oberen Teil 3a der Sackbohrung 3a, 3b hinein, daß sich die Stirnflächen der beiden Dornteile 4a, 4b bis auf einen geringen Abstand von etwa zwei bis drei Millimeter gegenüberstehen.
Bei betätigtem Kolben 14 verringert sich der Abstand bis auf einen Mindestabstand von etwa 0,2 bis 0,3 Millimeter.

Wenngleich in der Zeichnung auch nicht dargestellt, so läßt sich der Hub des Kolbens 14 so einstellen, daß sich die beiden Stirnflächen in beiden Stellungen jeweils in einem vorbestimmten Abstand gegenüberstehen.

Sind der obere Teil 4b und der untere Teil 4a des Dorns 4a, 4b im oberen Teil 3a der Sackbohrung 3a, 3b angeordnet und stehen sich deren Stirnflächen in einem Abstand gegenüber, bildet sich ein ringförmiger Spalt 2 aus, der der Wandung 5b des mit der Vorrichtung herzustellenden rohrförmigen Körpers 5 entspricht.
Dadurch, daß sich die Stirnflächen der beiden Dornteile 4a, 4b in einem Abstand gegenüberstehen, bildet sich des weiteren ein scheibenförmiger Spalt 2a aus, der in den ringförmigen Spalt 2 mündet. Durch diesen scheibenförmigen Spalt 2a wird die membranförmige Trennwand 6 des mit der Vorrichtung herzustellenden rohrförmigen Körpers 5 gebildet.

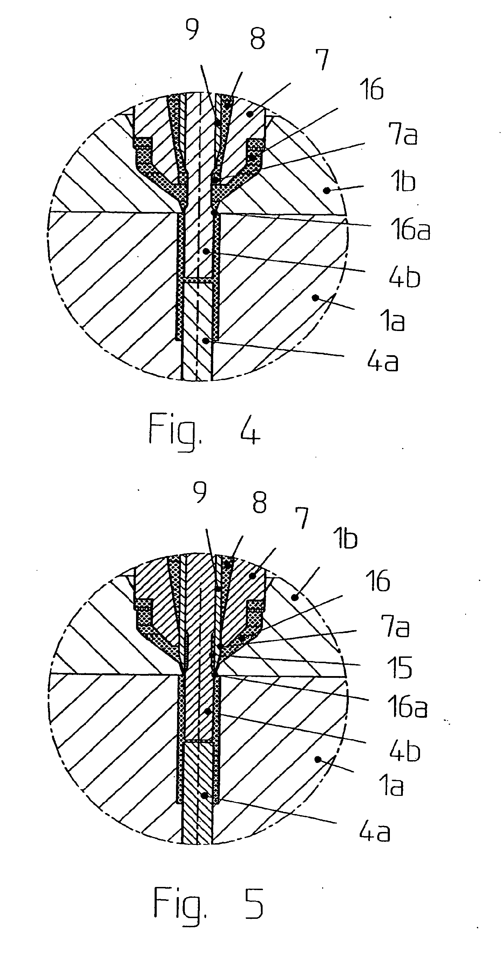

Der obere Teil 4b des Dorns 4a, 4b ist mit einem rohrförmigen Verschlußelement 9 umgeben. Das Verschlußelement 9 ist axial verschiebbar auf dem oberen Teil 4b des Doms 4a, 4b angeordnet. Hierdurch lassen sich die ringförmige Düsenaustrittsöffnung 7a der Spritzgießdüse 7 sowie der Anbindungsringspalt 16a verschließen, wie dies insbesondere den Figuren 4 und 5 entnommen werden kann. In Figur 4 befindet sich das Verschlußelement 9 in einer oberen Position, wodurch die ringförmige Düsenaustrittsöffnung 7a geöffnet ist und somit aus der Spritzgießdüse 7 Schmelze 8 in den ringförmigen Hohlraum 16 gelangen kann. Des weiteren kann Schmelze 8 durch den Anbindungsringspalt 16a in den ringförmigen Spalt 2 gelangen. In Figur 5 ist das Verschlußelement 9 in einer unteren Position angeordnet, wodurch die ringförmige Düsenaustrittsöffnung 7a sowie der Anbindungsringspalt 16a verschlossen sind, so daß keine Schmelze 8 aus dem Anbindungsringspalt 16a austreten kann.

Der Durchmesser des oberen Teils 4b des Dorns 4a, 4b ist im Bereich des Hubes des Verschlußelements 9 etwas verringert. Hierdurch entsteht ein Freiraum 15, durch welchen verhindert wird, daß das Verschlußelement 9 an der Wandung des oberen Teils 4b des Doms 4a, 4b vorbeistreicht. Hierdurch wird vermieden, daß Schmelze 8, welche sich auf der Oberfläche des oberen Teils 4b des Doms 4a, 4b abgesetzt hat und teilweise schon plastifiziert ist, vom oberen Teil 4b des Dorns 4a, 4b abgeschabt wird und sich mit der übrigen Schmelze 8 vermischt. Eine Vermischung dieser abgeschabten Partikel mit der Schmelze 8 würde einen deutlichen Qualitätsverlust mit sich bringen.

Wie insbesondere Figur 4 entnommen werden kann, ist der Abstand, in dem sich die Stirnflächen der beiden Dornteile 4a, 4b gegenüberstehen, zunächst so groß, daß der scheibenförmige Spalt 2a vollständig mit Schmelze 8 ausgefüllt werden kann. Bei geöffnetem Anbindungsspalt 16a wird durch einen Ringanguß der ringförmige Spalt 2 mit Schmelze 8 gefüllt, welche sich vom Umfang des scheibenförmigen Spalts 2 bis zu seinem Mittelpunkt hin ergießt. Nachdem der ringförmige Spalt 2 sowie der scheibenförmige Spalt 2a vollständig mit Schmelze 8 gefüllt sind, wird der untere Teil 4a des Dorns 4a, 4b mittels des Kolbens 14 in Richtung zum oberen Teil 4b des Doms 4a, 4b bewegt, wodurch sich der scheibenförmige Spalt 2a verringert und Schmelze aus dem scheibenförmigen Spalt herausgedrückt wird. Damit die Schmelze 8 zunächst noch aus dem ringförmigen Spalt 2 herausfließen kann, bleibt der Anbindungsspalt 16a zunächst geöffnet. Wird der Anbindungsspalt 16a geschlossen, bevor der untere Teil 4a des Doms 4a, 4b sich bis auf den voreingestellten Mindestabstand im oberen Teil 4b des Doms 4a, 4b genähert hat geschlossen, kann keine Schmelze 8 mehr aus dem ringförmigen Spalt 2 abfließen, wodurch sich die Dichte der Schmelze und damit des herzustellenden rohrförmigen Körpers erhöht. Der Mindestabstand der Stirnflächen der beiden Dornteile 4a, 4b wird so eingestellt, daß die membranförmige Trennwand 6 eine Dicke von 0,2 bis 0,3 Millimeter hat.

Das Verschlußelement 9 weist an seinem der Düsenaustrittsöffnung 7a abgewandten Ende ein als Buchse 10 ausgebildetes Mischelement 10 auf. Mittels der Buchse 10 ist das Verschlußelement 9 in der Spritzgießdüse 7 axial verschiebbar gelagert.

Die Buchse 10 weist an ihrer Oberfläche kanalförmige Vertiefungen auf, durch welche der Schmelze 8 ihren Weg vorgegeben wird. Die durch einen Zuführkanal 12 in das Innere der Spritzgießdüse 7 geleitete Schmelze 8 trifft zunächst auf die Oberfläche der Buchse 10 auf, wodurch der Weg durch die kanalförmigen Vertiefungen 11 zwangsweise vorgegeben ist. Hierdurch wird der Schmelzefluß in eine Vielzahl von Fließlinien aufgeteilt, welche am hinteren Ende der Buchse 10 wieder zusammenfließen. Durch die Vielzahl der Fließlinien wird in vorteilhafter Weise erreicht, daß die Schmelze im wesentlichen keine Fließlinie mehr aufweist.

Durch Variierung des Querschnitts der kanalförmigen Vertiefungen läßt sich erreichen, daß trotz des weiteren Wegs, den die Schmelze bis zum rückwärtigen Ende der Buchse 10 zurücklegen muß, der sich in axialer Richtung erstreckende Schmelzefluß am rückwärtigen Ende der Buchse 10 in etwa genauso groß ist wie am vorderen Ende der Buchse 10, wo der Zuführkanal 12 auf die Buchse 10 trifft.

## Patentansprüche

1. Vorrichtung zum Herstellen eines rohrförmigen Körpers (5), welcher in seinem Inneren eine sich quer zur Längsachse (5a) des rohrförmigen Körpers (5) erstreckende membranförmige Trennwand (6) aufweist, mit einer schließ- beziehungsweise öffenbaren Spritzgießform (1a, 1b), welche aus zwei Werkzeughälften (1a, 1b) besteht, welche einen der Wandung (5b) des rohrförmigen Körpers (5) entsprechenden ringspaltförmigen Hohlraum (2) aufweist, welcher durch eine Öffnung (3a) in der Spritzgießform (1a, 1b) und einen in der Öffnung (3a) angeordneten zweigeteilten Dom (4a, 4b) gebildet wird, wobei der Dom (4a, 4b) aus einem oberen Teil (4b) und einem unteren Teil (4a) besteht, die sich mit ihren Stirnflächen in einem Abstand gegenüberstehen, und einer der Teile (4a) bei geschlossener Form relativ zu der Werkzeughälfte (1a), in der er angeordnet ist, axial verschiebbar ist,
**dadurch gekennzeichnet,**
**dass** eine Spritzgießdüse (7) zur Zuführung von Schmelze (8) in den Hohlraum (2) vorhanden ist, welche eine ringförmige Düsenaustrittsöffnung (7a) aufweist,
welche in einen ringförmigen Hohlraum (16) mündet, der einen ringförmigen Anbindungsspalt (16a) aufweist, wobei ein rohrförmiges Verschlusselement (9) vorhanden ist, zum Verschließen des Anbindungsringspalts (16a).

2. Vorrichtung nach Anspruch 1,
**dadurch gekennzeichnet,**
**daß** die axiale Verschiebung des verschiebbaren Domteils (4a) sowie die Bewegung des Verschlußelements (9) steuerbar sind.

3. Vorrichtung nach Anspruch 1 oder 2,
**dadurch gekennzeichnet,**
**daß** zwischen den Dornteilen (4a, 4b) ein Mindestabstand einstellbar ist.

4. Vorrichtung nach einem der Ansprüche 1 bis 3,
**dadurch gekennzeichnet,**
**daß** ein Mischelement (10) vorhanden ist, welches das Verschlußelement (9) zumindest teilweise umschließt.

5. Vorrichtung nach Anspruch 4,
**dadurch gekennzeichnet,**
**daß** das Mischelement (10) auf seiner Oberfläche ausgebildete kanalförmige Vertiefungen (11) für die Schmelze (8) aufweist.

6. Vorrichtung nach Anspruch 5,
**dadurch gekennzeichnet,**
**daß** der Querschnitt der Vertiefungen (11) variiert.

## Claims

1. Device for manufacturing a tubular body (5) which has, in its interior, a membrane-like partition (6) extending transversely to the longitudinal axis (5a) of the tubular body (5), comprising a closable or openable injection mould (1a, 1b) which consists of two mould halves (1a, 1b), which has a cavity (2) which is in the form of an annular gap and corresponds to the wall (5b) of the tubular body (5), which cavity is formed by an opening (3a) in the injection mould (1a, 1b) and a two-part mandrel (4a, 4b) arranged in the opening (3a), the mandrel (4a, 4b) consisting of an upper part (4b) and a lower part (4a) whose end faces are opposite one another and a distance apart, and one of the parts (4a) being axially displaceable, when the mould is closed, relative to the mould half (1a) in which it is arranged, **characterized in that** an injection moulding nozzle (7) for feeding melt (8) into the cavity (2) is present, which injection moulding nozzle has an annular nozzle outlet opening (7a) which opens into an annular cavity (16) which has an annular connecting gap (16a), a tubular closure element (6) being present for closing the connecting annular gap (16a).

2. Device according to Claim 1, **characterized in that** the axial displacement of the displaceable mandrel part (4a) and the movement of the closure element (9) are controllable.

3. Device according to Claim 1 or 2, **characterized in that** a minimum distance can be set between the mandrel parts (4a, 4b).

4. Device according to any of Claims 1 to 3, **characterized in that** a mixing element (10) which at least partly surrounds the closure element (9) is present.

5. Device according to Claim 4, **characterized in that** the mixing element (10) has channel-like indentations (11) for the melt (8) which are formed on its surface.

6. Device according to Claim 5, **characterized in that** the cross-section of the indentations (11) varies.

## Revendications

1. Dispositif de fabrication d'un corps tubulaire (5) comportant, dans son espace interne, une cloison séparatrice (6) en forme de membrane qui s'étend transversalement par rapport à l'axe longitudinal (5a) dudit corps tubulaire (5), présentant un moule (1a, 1b) de coulée par injection, pouvant être respectivement fermé et ouvert, composé de deux moitiés d'outil (1a, 1b), et muni d'une cavité (2) en forme d'interstice annulaire qui correspond à la paroi (5b) du corps tubulaire (5) et est formée par un orifice (3a) pratiqué dans ledit moule (1a, 1b) de coulée par injection, et par une broche (4a, 4b) en deux parties, logée dans ledit orifice (3a), sachant que ladite broche (4a, 4b) est constituée d'une partie supérieure (4b) et d'une partie inférieure (4a) dont les faces extrêmes se trouvent en vis-à-vis à distance, et sachant que, à l'état fermé dudit moule, l'une (4a) desdites parties peut coulisser axialement par rapport à la moitié d'outil (1a) dans laquelle elle est logée,
**caractérisé par**
la présence d'une buse (7) de coulée par injection qui est affectée à l'amenée de masse en fusion (8) dans la cavité (2), et est pourvue d'un orifice annulaire de sortie (7a) débouchant dans une cavité annulaire (16) dotée d'un interstice annulaire de rattachement (16a), un élément obturateur tubulaire (9) étant présent pour obturer ledit interstice annulaire de rattachement (16a).

2. Dispositif selon la revendication 1,
**caractérisé par**
la faculté de commander le coulissement axial de la partie coulissante (4a) de la broche, ainsi que le mouvement de l'élément obturateur (9).

3. Dispositif selon la revendication 1 ou 2,
**caractérisé par le fait**
**qu'**un espacement minimal peut être réglé entre les parties (4a, 4b) de la broche.

4. Dispositif selon l'une des revendications 1 à 3,
**caractérisé par**
la présence d'un élément mélangeur (10) entourant, au moins partiellement, l'élément obturateur (9).

5. Dispositif selon la revendication 4,
**caractérisé par le fait**
**que** l'élément mélangeur (10) présente des creusures (11) en forme de canaux, pratiquées sur sa surface et destinées à la masse en fusion (8).

6. Dispositif selon la revendication 5,
**caractérisé par le fait**
**que** la section transversale des creusures (11) varie.
